# EUROPÄISCHE PATENTSCHRIFT

(11) **EP 3 299 312 B1**
(45) Veröffentlichungstag und Bekanntmachung des Hinweises auf die Patenterteilung: **13.03.2019**
(21) Anmeldenummer: 16189985.1
(22) Anmeldetag: 21.09.2016
(51) Int. Cl.: B65D 75/58, B65B 61/18, B29C 47/02, B32B 27/32, B32B 37/15, B29L 31/00, B29K 509/00

(54) **KUNSTSTOFFGEWEBEVERBUND, VERPACKUNGSBEUTEL AUS EINEM KUNSTSTOFFGEWEBEVERBUND SOWIE VERFAHREN ZUR HERSTELLUNG EINES KUNSTSTOFFGEWEBEVERBUNDES**
COMPOSITE PLASTIC TISSUE, PACKAGING BAG MADE OF A COMPOSITE PLASTIC TISSUE AND METHOD FOR PRODUCING A PLASTIC TISSUE COMPOSITE
COMPOSITE EN TISSU ET MATIÈRE PLASTIQUE, SACHET D'EMBALLAGE EN COMPOSITE EN TISSU ET MATIÈRE PLASTIQUE ET PROCÉDÉ DE FABRICATION D'UN COMPOSITE EN TISSU ET MATIÈRE PLASTIQUE

(43) Veröffentlichungstag der Anmeldung: 28.03.2018
(73) Patentinhaber: Mondi AG, 1030 Wien (AT)
(72) Erfinder: Kösters, Jens, 49134 Wallenhorst (DE); Perick, Matthias, 48683 Ahaus-Alstätte (DE)
(74) Vertreter: Lorenz, Bernd Ingo Thaddeus

(56) Entgegenhaltungen:
- EP-A1- 2 522 595
- US-A1- 2013 077 898

## Beschreibung

Die Erfindung betrifft einen Kunststoffgewebeverbund für Kunststoffgewebeverbundbeutel mit einem aus sich kreuzenden Folienbändchen gebildeten Bändchengewebe und mit einer Außenfolie. Die Außenfolie ist mit dem Bändchengewebe verbunden, insbesondere durch eine im Rahmen einer Extrusionskaschierung aufgebrachten Polymerschicht.

Kunststoffgewebeverbundbeutel sind insbesondere für Großgebinde geeignet, die ein erhebliches Füllvolumen und ein erhebliches Füllgewicht aufweisen. Durch die einzelnen, einander kreuzenden Bändchen des Bändchengewebes können sehr große Belastungen aufgenommen werden. Zu einer besonders hohen Stabilität trägt auch bei, dass die Folienbändchen in der Regel orientiert sind. Selbst bei einer lokalen Beschädigung des Kunststoffgewebeverbundes kann durch die einzelnen Folienbändchen ein Weiterreißen verhindert werden.

Besondere Vorteile ergeben sich durch den Verbund des Bändchengewebes mit der Außenfolie, wobei sich die unterschiedlichen mechanischen Eigenschaften ergänzen.

Die Außenfolie bildet eine glatte, hochwertige Oberfläche, die auch mit einem Konterdruck versehen sein kann. Bei der Herstellung des Kunststoffgewebeverbundes wird das Bändchengewebe als vorgefertigtes Vorprodukt zugeführt und dann mit der in der Regel ebenfalls vorgefertigten Außenfolie verbunden. Dabei ist zu beachten, dass der übliche Kaschierungsprozess sich grundlegend von der eigentlichen Folienherstellung in großen Extrusionsanlagen unterscheidet, wobei im Rahmen der Erfindung die Folie, welche die Folienbändchen bildet, sowie die Außenfolie sowohl durch Blasfolienextrusion als auch Flachfolienextrusion gebildet sein können.

Die Herstellung des Bändchengewebes als Vorprodukt hoch spezialisiert, weil nach der Extrusion und Orientierung einer entsprechenden Folie eine Vielzahl von Folienbändchen gebildet wird, die dann in einem Webprozess verarbeitet werden. Bei der Herstellung des Kunststoffgewebeverbundes wird deshalb bei der Auswahl eines Bändchengewebes als Vorprodukt auf übliche, frei verfügbare Standard-Produkte zurückgegriffen.

Obwohl das Bändchengewebe üblicherweise aus einem heißsiegelbaren Material wie Polypropylen gebildet ist, ist eine dichte Versiegelung aufgrund der Gewebestruktur nicht oder allenfalls eingeschränkt möglich. Vor diesem Hintergrund ist es bekannt, bei der Herstellung eines Kunststoffgewebeverbundbeutels die gegenüberliegenden Frontwände mit einer unterschiedlichen Länge zu bilden, um dann die überstehende Frontwand zum Verschluss des Kunststoffgewebeverbundbeutels umlegen zu können.

Bei einer von der Erfindung umfassten Ausgestaltung als Seitenfaltenbeutel ist dann die Trennlinie vorzugsweise mit mehreren Stufen, also eine Art Staffelung versehen, weshalb die beschriebene Trennlinie in der Praxis auch als Staffelschnitt bezeichnet wird.

Ein Kunststoffgewebeverbund sowie ein daraus gebildeter Verpackungsbeutel sind aus der EP 1 228 357 B1 bekannt, wobei eine Bahn des Kunststoffgewebeverbundes mit einer Perforation versehen ist und wobei eine Schwächungslinie in Form einer Perforation durch Stanzen gebildet werden kann. Zur Bildung der Perforation wird der Kunststoffgewebeverbund abschnittsweise durchgestanzt, wobei zwischen den durchgestanzten Bereichen Perforationsstege verbleiben.

In der Praxis ist die Erzeugung einer Perforation jedoch mit Problemen verbunden. Zunächst können gerade im Hinblick auf das Bändchengewebe die Perforationsstege nicht leicht durchtrennt werden. Es besteht die Gefahr, dass sich Fransen bilden oder sogar einzelne Bändchen des Bändchengewebes teilweise herausgezogen werden. Des Weiteren wird nach einem Abreißen entlang der Perforation eine unsaubere Risskante beobachtet.

Wenn diese Nachteile durch eine Verkleinerung der Perforationsstege reduziert werden sollen, besteht dann die Gefahr, dass der Kunststoffgewebeverbund bei seiner Verarbeitung unkontrolliert an der Perforation aufreißt. Dabei ist zu berücksichtigen, dass bei einem bevorzugten Verfahren zur Herstellung eines Verpackungsbeutels aus dem Kunststoffgewebeverbund zunächst ein Kunststoffgewebeverbundschlauch - gegebenenfalls mit eingelegten Seitenfalten - gebildet wird, von dem dann einzelne Schlauchabschnitte abgetrennt werden. Gerade bei der Bildung eines solchen Kunststoffgewebeverbundschlauches mit Faltmessern oder dergleichen kann es bei einer zu schwachen Perforation zu einem Zerreißen kommen.

Um diese Nachteile zu vermeiden, ist aus der EP 2 117 821 B1 bekannt, eine Schwächungslinie mit einem Laser zu erzeugen, wobei während des Führens des Laserstrahls entlang einer vorgegebenen Kontur einer Abrisslinie die Laserenergie des Laserstrahls gemäß einer vorgegebenen Eindringtiefe in das Bahnmaterial verändert wird. Wenn das Bändchengewebe gemäß einer Weiterbildung der EP 2 117 821 B1 mit einer Kunststoffschicht, insbesondere einer Kunststofffolie versehen ist, so kann durch eine geeignete Steuerung der Laserenergie auch in dieser zusätzlichen Schicht eine Perforation erzeugt werden, so dass dann die so gebildete Kunststoffgewebeverbundbahn in gewünschter Weise perforiert werden kann.

Der Einsatz eines Lasers ist gemäß der EP 2 117 821 B1 also zweckmäßig, um eine Abrisslinie zu bilden. Wenn lediglich eine Schwächungslinie ohne eine Perforation gebildet werden soll, ist die Verfahrensführung in der Praxis äußerst schwierig. Bei einem Bändchengewebe liegen nämlich in Dickenrichtung gesehen üblicherweise zwei sich kreuzende Bändchen übereinander. Da ein solches Bändchengewebe jedoch nicht völlig dicht sein kann und die Folienbändchen wellenförmig ineinander verschlungen sind, treten an den Kreuzungspunkten und Übergängen jedoch auch Bereiche auf, an denen lediglich ein Bändchen oder sogar kein Bändchen vorhanden ist. Ein Laserstrahl kann dann durch das Bändchengewebe hindurch in die darunterliegende Polymerschicht strahlen und zumindest lokal eine Durchtrennung bewirken. Bei einer Abrisslinie sind solche lokalen Perforationen unerheblich. Es kann jedoch nicht ohne Weiteres eine Schwächungslinie gebildet werden, welche nicht als Abrisslinie, sondern als Aufreißhilfe vorgesehen ist, weil dann durch lokale Fehlstellen ein dichter Verschluss eines Verpackungsbeutels nicht mehr gewährleistet werden kann. Zumindest ist mit einer aufwendigen Verfahrensführung und/oder einem erheblichen Aufwand für die Qualitätskontrolle zu rechnen.

Der vorliegenden Erfindung liegt vor diesem Hintergrund die Aufgabe zugrunde, einen Kunststoffgewebeverbund anzugeben, bei dem auf leichte und zuverlässige Weise eine Schwächungslinie gebildet werden kann. Des Weiteren sollen auch ein Verpackungsbeutel aus dem Kunststoffgewebeverbund sowie ein Verfahren zur Herstellung des Kunststoffgewebeverbundes angegeben werden.

Gegenstand der Erfindung ist somit zunächst ein Kunststoffgewebeverbund für Kunststoffgewebeverbundbeutel gemäß Patentanspruch 1. Ausgehend von einem gattungsgemäßen Kunststoffgewebeverbund ist erfindungsgemäß vorgesehen, dass das Bändchengewebe ein die Absorption von Laserstrahlung erhöhendes Laseradditiv aufweist und dass die Außenfolie zumindest eine erste Folienschicht umfasst, welche frei von Laseradditiv ist.

Erfindungsgemäß wird als Vorprodukt für die Herstellung des Kunststoffgewebeverbundes kein übliches Bändchengewebe eingesetzt, sondern ein Bändchengewebe, welches bereits bei seiner Herstellung mit einem die Absorption von Laserstrahlung erhöhenden Laseradditiv versehen ist. Dieses spezielle Bändchengewebe wird dann mit der Außenfolie kombiniert, welche zumindest eine erste Folienschicht umfasst, die frei von Laseradditiv ist. Im Rahmen der Erfindung ist es also möglich, mit einem Laser selektiv das Bändchengewebe zu schwächen bzw. zu zerschneiden, wobei zumindest die erste Folienschicht der Außenfolie nicht durchtrennt wird und vorzugsweise völlig unversehrt bleibt. Damit ist im Rahmen der Erfindung gemeint, dass die erste Folienschicht der Außenfolie durch den Laser nicht geschwächt und auch nicht teilweise eingeschnitten bzw. eingekerbt wird.

Selbst wenn für das Bändchengewebe einerseits und die erste Folienschicht der Außenfolie andererseits gleiche oder ähnliche Materialien wie Polypropylen eingesetzt werden, kann durch das Laseradditiv ein völlig unterschiedliches Absorptionsvermögen für Laserstrahlung erreicht werden. Das Bändchengewebe mit dem Laseradditiv kann sehr effektiv geschwächt bzw. geschnitten werden.

Die Folienbändchen können jeweils einschichtig aus einer Monofolie oder mehrschichtig, insbesondere aus einer Coextrusionsfolie gebildet sein. Bei einem einschichtigen Aufbau weisen die Folienbändchen stets über ihre gesamte Dicke das Laseradditiv auf.

Bei einem mehrschichtigen Aufbau sind dagegen unterschiedliche Ausgestaltungen möglich. So kann auch bei einer mehrschichtigen Ausgestaltung der einzelnen Folienbändchen das Laseradditiv in allen Folienschichten vorhanden sein und somit auch über die gesamte Foliendicke.

Gemäß einer alternativen Ausgestaltung ist bei einem mehrschichtigen Aufbau der Folienbändchen vorgesehen, dass sich das Laseradditiv nur in einer oder einem Teil der Schichten der Folienbändchen befindet.

Insbesondere können die Folienbändchen jeweils einen zumindest dreischichtigen Aufbau aufweisen, wobei eine Kernschicht mit dem Laseradditiv zwischen Deckschichten angeordnet ist, welche frei von Laseradditiv sind. Eine solche Ausgestaltung ist insbesondere dann zweckmäßig, wenn die Außenschichten nur dünn sind. Bei der Bestrahlung mit einem Laser wird dann die Kernschicht effektiv geschwächt, während - ausgehend von der gleichen polymeren Grundsubstanz - die Außenschichten weniger stark geschwächt werden. Beispielsweise kann eine Kernschicht aus Polypropylen (PP) zwischen zwei Deckschichten aus Polypropylen angeordnet sein, wobei nur die Kernschicht das Laseradditiv aufweist. Vorzugsweise sind dann die Deckschichten dünn gegenüber der Kernschicht. Das Dickenverhältnis einer Deckschicht zu der Kernschicht kann beispielsweise zwischen 1:4 und 1:20 liegen, wobei die beiden Deckschichten bevorzugt gleich ausgebildet sind.

Bei einem solchen mehrschichtigen Aufbau ergibt sich nicht nur der Vorteil, dass die Menge an Laseradditiv verringert werden kann. Vielmehr ergeben sich auch bei einer Coextrusion des zumindest dreischichten Schichtaufbaus Vorteile, weil durch die Deckschichten ohne Laseradditiv Partikelablagerungen an der Extrusionsdüse vermieden werden können. Das in Form von Partikeln eingebrachte Laseradditiv befindet sich dann bei einer Coextrusion nicht an der Oberfläche der erzeugten Folie.

Bevorzugtes Material für die Folienbändchen ist unabhängig von einem einschichtigen oder mehrschichten Aufbau Polypropylen, wobei gemäß dem nachfolgend noch weiter erläuterten Verfahren zur Herstellung eines Kunststoffgewebeverbundes eine durch Extrusion bzw. Coextrusion gebildete Polymerfolie orientiert und in die Folienbändchen geschnitten wird.

Um den Kunststoffgewebeverbund zu bilden, können die Außenfolie und das Bändchengewebe auf unterschiedliche Weise verbunden werden, wobei eine Extrusionskaschierung bevorzugt ist. Besonders bevorzugt sind die Außenfolie und das Bändchengewebe durch zumindest eine an das Bändchengewebe unmittelbar anschließende Zwischenschicht extrusionskaschiert. Eine solche extrusionskaschierte Zwischenschicht wird schmelzflüssig zwischen das Bändchengewebe und die Außenfolie eingebracht. Wenn dann während des Kaschierprozesses der so gebildete Schichtaufbau insbesondere in einem Walzenspalt mit Druck beaufschlagt wird, kann die zunächst noch schmelzflüssige Zwischenschicht sich an die nicht vollständig ebene Struktur des Bändchengewebes anpassen und in einem gewissen Maße auch in Zwischenräume eindringen, wodurch eine besonders zuverlässige Verbindung und hohe Verbundhaftung erreicht werden können.

Das Laseradditiv kann insbesondere für die Wellenlänge eines Nd:YAG-Lasers oder auch die Wellenlänge eines CO₂-Lasers angepasst sein. Schließlich sind auch Breitband-Laseradditive bekannt, welche für verschiedene Wellenlängenbereiche geeignet sind. Die Wellenlänge eines Nd:YAG-Lasers liegt üblicherweise bei 1064 µm oder bei einer in der Praxis üblichen Frequenzverdopplung bei 532 µm im sichtbaren Wellenlängenbereich. Die Wellenlänge des im Rahmen der Erfindung bevorzugten CO₂-Lasers liegt typischerweise bei 10,6 µm.

Das Laseradditiv kann vorzugsweise Talkum und/oder Schichtsilikate enthalten bzw. darauf bestehen.

Als Laseradditiv, also laserabsorptive Substanz erweisen sich insbesondere Mischsilikate als besonders vorteilhaft. Beispielsweise können Lepidolith (Al-K-Li-F-Silikat), Porphyr (Al-K-Fe-Silikat) oder Phonolith (Al-K-Na-Ca-Fe-Silikat) eingesetzt werden. Als besonders günstiger Zusatz zur Absorption von Laserstrahlung hat sich Kaolinit erwiesen. Dabei handelt es sich um ein Mineral aus der Klasse der Schichtsilikate. Kaolinit hat die chemische Zusammensetzung: Al₄[(OH)₈|Si₄O₁₀]. Es ist Hauptbestandteil des Gesteins Kaolin.

Weitere Substanzen, die als Laseradditiv in Betracht kommen sind folgende anorganische Substanzen: Glimmer, Serizit, Chrysotil-Asbest, Talkum (Mg-Silikat), Kieselgel (SiO₂), Anorganische Pigmente, wie z.B. Zinkphosphat (Zn₃(PO₄)₂ x 4 H₂O) oder Calciumchromat (CaCrO₄).

Auch polymere Stoffe können als Zusätze zur Verbesserung des Absorptionsvermögens eingesetzt werden. Es kommen beispielsweise hochmolekulares Polyethylenglykol, Polysaccharide, Polydimethylsiloxan, Polyacetale, wie Polyoxymethylen, Polycarbonat oder Polyethylenterephthalat (PET) in Frage.

Die laserabsorptive Substanz wird vorzugsweise in einer Menge von mehr als 0,1 Gew.-% und weniger als 50 Gew.-%, vorzugsweise zwischen 0,2 Gew.-% und 10 Gew.- bezogen auf die Gesamtmasse der die Substanz enthaltenen Schicht eingesetzt.

Durch die Zugabe des Laseradditivs ist es möglich, dass bei der Erzeugung einer Schwächungslinie das Bändchengewebe weitgehend oder vorzugsweise vollständig durchtrennt wird, wobei die erste Folienschicht der Außenfolie vollständig unversehrt bleibt. Dabei kann die Schwächungslinie in der unmittelbar an das Bändchengewebe anschließenden Zwischenschicht, die beispielsweise durch Extrusionskaschierung gebildet ist, enden. Diese Zwischenschicht bildet dann noch eine Art Puffer und schützt somit auch die Außenfolie. Im Rahmen einer solchen Ausgestaltung bleibt dann die gesamte Außenfolie auch bei einem mehrschichtigen Aufbau vollständig unversehrt.

Gemäß einer bevorzugten Weiterbildung der Erfindung sind die erste Folienschicht der Außenfolie und das Bändchengewebe aus Polypropylen (PP) gebildet. Die erste Folienschicht kann beispielsweise an der von dem Bändchengewebe abgewandten Seite der Außenfolie eine Oberfläche bilden, wobei sehr gute optische und mechanische Eigenschaften mit einer Folienschicht aus biaxial orientiertem Polypropyeln (BO-PP) erreicht werden können. Gerade bei gleichen oder ähnlichen Materialien für die erste Folienschicht der Außenfolie sowie das Bändchengewebe ist die Zugabe von Laseradditiv in dem Bändchengewebe ausschlaggebend für den unterschiedlichen Energieeintrag und damit die unterschiedliche Materialschwächung mittels Laserstrahlung.

Die Außenfolie kann einschichtig gebildet sein und besteht dann lediglich aus der ersten Folienschicht. Darüber hinaus ist auch ein mehrschichtiger Aufbau möglich, wobei dann vorzugsweise sämtliche Folienschichten der Außenfolie frei von Laseradditiv sind und auch bei der Erzeugung der Schwächungslinie mittels Laser unversehrt bleiben.

Darüber hinaus ergeben sich im Rahmen der Erfindung weitere Ausgestaltungsmöglichkeiten. Beispielsweise kann im Rahmen der Erfindung vorgesehen sein, dass die Außenfolie an einer ersten Seite des Bändchengewebes angeordnet ist, wobei an einer gegenüberliegenden zweiten Seites Bändchengewebes - vorzugsweise über eine durch Extrusionskaschierung gebildete Zwischenschicht - eine Innenfolie vorgesehen ist, welche an ihrer dem Bändchengewebe gegenüberliegenden Seite, d. h., an einer Oberfläche des Kunststoffgewebeverbundes, eine Siegelschicht aufweist.

Gemäß der begrifflichen Zuordnung bildet die Außenfolie bei einem aus dem Kunststoffgewebeverbund gebildeten Verpackungsbeutel die Außenseite, während die Innenseite von der Innenfolie gebildet ist. In diesem Zusammenhang ergibt sich der Vorteil, dass bei der Herstellung eines solchen Verpackungsbeutels die Innenfolie an der Siegelschicht heißsiegelbar ist, wodurch der Verpackungsbeutel vergleichsweise leicht ausgeformt werden kann und auch weitere Funktionselemente wie Wiederverschlüsse, Ventile oder dergleichen aufgesiegelt werden können.

Gegenstand der Erfindung ist auch ein Verpackungsbeutel, der aus dem zuvor beschriebenen Kunststoffgewebeverbund gebildet ist, wobei die zuvor genannte Innenfolie jedoch nur optional ist.

Schließlich betrifft die Erfindung auch ein Verfahren zur Herstellung des Kunststoffgewebeverbundes, wobei Polypropylen mit einem Laseradditiv zu einer Polypropylenfolie extrudiert bzw. mit weiteren Schichten coextrudiert wird, wobei die Polypropylenfolie orientiert und in Folienbändchen geschnitten wird, wobei die Folienbändchen zu einer Bändchengewebebahn verwebt werden, wobei die Bändchengewebebahn durch eine Extrusionskaschierung mit einer Außenfolienbahn, welche zumindest eine erste Folienschicht umfasst, die frei von Laseradditiv ist, zu einer Kunststoffgewebeverbundbahn kaschiert wird und wobei durch eine Bestrahlung mittels Laser eine Schwächungslinie derart gebildet wird, dass die Bändchengewebebahn entlang einer Schwächungslinie zumindest teilweise zerstört wird.

Gemäß dem beschriebenen Verfahren kann eine Schwächungslinie als Abreißlinie derart gebildet werden, dass diese sich entlang einer Querrichtung zwischen gegenüberliegenden Rändern über die gesamte Breite der Kunststoffgewebeverbundbahn erstreckt.

Zusätzlich oder alternativ kann eine Schwächungslinie auch derart gebildet werden, dass diese sich entlang einer Querrichtung zwischen gegenüberliegenden Rändern über nur einen Teil der Breite der Kunststoffgewebeverbundbahn erstreckt. Es verbleibt dann also ein seitlicher Abstand. Eine solche Schwächungslinie ist typischerweise nicht als Abreißlinie während der Herstellung, sondern als Aufreißhilfe bei der Benutzung des Beutels vorgesehen. Eine einfache, gerade Linie kann genutzt werden, um einen dahinterliegenden Wiederverschluss freizulegen. Besonders bevorzugt kann die Schwächungslinie auch rahmenförmig in sich geschlossen sein, um einen von der Schwächungslinie umrandeten Abschnitt zur Bildung einer Öffnung bzw. zum Freilegen eines Wiederverschlusses entfernen zu können.

Die Schwächungslinie wird mittels Laser gebildet, wobei der Einsatz eines CO₂-Lasers bevorzugt ist.

Die Erfindung wird im Folgenden anhand von lediglich exemplarischen Ausführungsbeispielen erläutert, es zeigen:
- Fig. 1: einen Kunststoffgewebeverbund für Kunststoffgewebeverbundbeutel in einer perspektivischen, schematischen Darstellung,
- Fig. 2: einen Schichtaufbau des Kunststoffgewebeverbundes mit einer Schwächungslinie,
- Fig. 3: eine alternative Ausgestaltung des Kunststoffgewebeverbundes in einer Darstellung entsprechend der Fig. 2,
- Fig. 4: eine Kunststoffgewebeverbundbahn zur Bildung eines Seitenfaltenbeutels mit unterschiedlichen Schwächungslinien,
- Fig. 5: eine exemplarische Darstellung eines unbefüllten, flachgelegten Seitenfaltenbeutels.

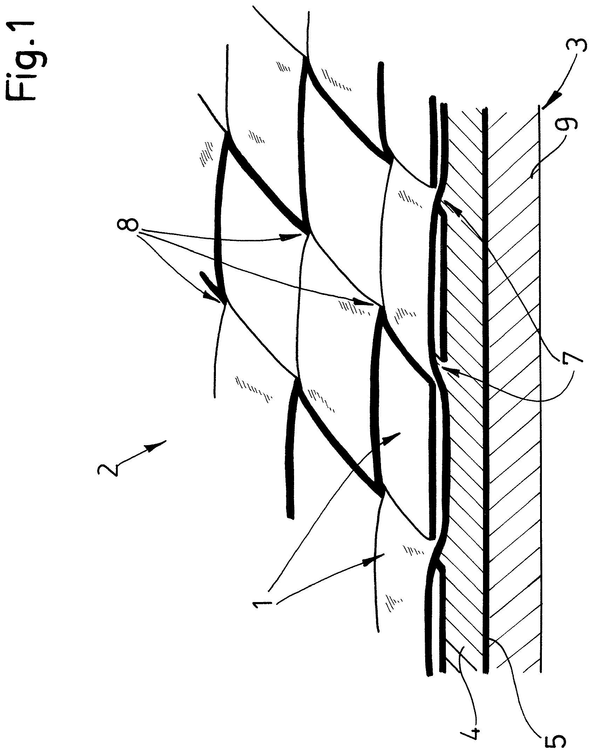

Die Fig. 1 zeigt in einer schematischen, teilgeschnitten Darstellung einen Kunststoffgewebeverbund für Kunststoffgewebeverbundbeutel mit einem aus sich kreuzenden Folienbändchen 1 gebildeten Bändchengewebe 2 und mit einer Außenfolie 3.

Das Bändchengewebe 2 und die Außenfolie 3 sind mit einer Zwischenschicht 4 extrusionskaschiert, wobei die Zwischenschicht 4 unmittelbar an das Bändchengewebe 2 sowie an die Außenfolie 3 anschließt.

In der Fig. 1 ist auch angedeutet, dass die Außenfolie 3 an ihrer Kontaktfläche zu der Zwischenschicht 4 mit einem Aufdruck 5 versehen ist, der durch die Außenfolie 3 hindurch sichtbar ist.

Die einzelnen das Bändchengewebe 2 bildenden Folienbändchen 1 sind aus orientiertem Polypropylen (O-PP) gebildet, wodurch sich eine besonders hohe Festigkeit ergibt. Selbst bei einer lokalen Beschädigung des Kunststoffgewebeverbundes kann durch die einzelnen Folienbändchen 1 ein Weiterreißen verhindert werden.

Durch die Kombination mit der Außenfolie 3 ergeben sich besonders vorteilhafte Eigenschaften des Kunststoffgewebeverbundes. Die Außenfolie 3 bildet eine glatte, hochwertige Oberfläche, wobei der Aufdruck 5 optimal geschützt ist. Des Weiteren wird durch die Außenfolie 3 trotz der Gewebestruktur des Bändchengewebes 2 eine Dichtheit des Kunststoffgewebeverbundes sichergestellt.

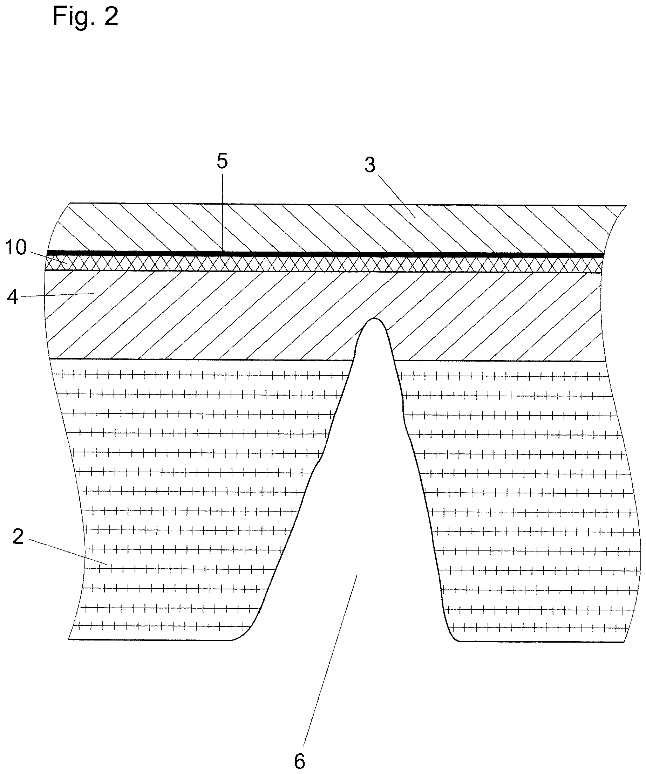

In der Praxis besteht bei der Bildung von Kunststoffgewebeverbundbeuteln das Bedürfnis, den Kunststoffgewebeverbund mit zumindest eine Schwächungslinie 6 (siehe nachfolgend in Fig. 2) zu versehen, um bei dem Produktionsprozess oder bei einem Freilegen einer Entnahmeöffnung den Kunststoffgewebeverbund kontrolliert zerreißen zu können.

Dabei ergibt sich das Problem, dass gerade das Bändchengewebe 2 eine besonders hohe Stabilität aufweist. Hinzu kommt gemäß der Fig. 1, dass das Bändchengewebe 2 nicht eben ist. Vielmehr sind die einzelnen Folienbändchen 1 miteinander verschlungen, so dass sich lokal unterschiedliche Schichtungen ergeben können. Während über ein Großteil der Fläche in Dickenrichtung zwei Folienbändchen 1 übereinander liegen, befindet sich an Übergängen 7 sowie an Kreuzungspunkten 8 des Bändchengewebes 2 nur eine sogar gar keine Lage des Bändchengewebes 2.

Während der Kunststoffgewebeverbund leicht vollständig durchgestanzt oder geschnitten werden kann, ist ein Anstanzen oder Einschneiden des Kunststoffgewebeverbundes zur Erzeugung lediglich einer Schwächungslinie 6 schwierig. Die Schwächungslinie 6 muss so erzeugt werden, dass vorzugsweise das gesamte Bändchengewebe 2 einheitlich durchtrennt oder zumindest geschwächt wird, ohne dass die Außenfolie 3 an den Übergängen 7 und Kreuzungspunkten 8 zu stark beschädigt wird.

Vor diesem Hintergrund ist im Rahmen der Erfindung vorgesehen, dass das Bändchengewebe 2 ein die Absorption von Laserstrahlung erhöhendes Laseradditiv aufweist, wobei die Außenfolie 3 zumindest eine erste Folienschicht 9 umfasst, welche frei von Laseradditiven ist. Wenn dann der in Fig. 1 dargestellte Kunststoffgewebeverbund mit einer entsprechenden Laserwellenlänge bestrahlt wird, wird selektiv nur das Bändchengewebe 2 geschwächt und vorzugsweise durchtrennt, ohne dass die erste Folienschicht 9 der Außenfolie 3 beeinträchtigt wird. Insbesondere ergibt sich für die Erzeugung der Schwächungslinie auch kein wesentlicher Unterschied, ob lokal zwei Lagen des Bändchengewebes 2 vorliegen oder an einem Übergang 7 oder an einem Kreuzungspunkt 8 nur ein Folienbändchen 1 oder überhaupt kein Folienbändchen 1 vorhanden ist.

Gemäß einer bevorzugten Ausgestaltung der Erfindung ist der Kunststoffgewebeverbund auf der Basis von Polypropylen gebildet. Die Außenfolie 3 kann beispielsweise als Monofolie lediglich aus der ersten Folienschicht 9 bestehen, wobei insbesondere biaxial orientiertes Polypropylen (BO-PP) geeignet ist. Die Schichtdicke der Außenfolie kann beispielsweise zwischen 15 und 80 µm liegen, wobei gerade bei einer Bildung der Außenfolie 3 aus BO-PP eine vergleichsweise geringe Dicke von beispielsweise 18 µm ausreichend ist.

Die bei der Extrusionskaschierung eingebrachte Zwischenschicht kann beispielsweise auch auf der Basis von Polypropylen gebildet sein und typischerweise eine Dicke zwischen 15 µm und 45 µm aufweisen. Alternativ kann zur besseren Anpassung an die eingesetzten Materialien eine Extrusionskaschierung mittels Coextrusion erfolgen, wobei dann die Gesamtdicke der gemeinsam extrudierten Lagen ohne weiteres auch in dem angegebenen Bereich von 15 µm bis 40 µm liegen kann.

Das typische Flächengewicht des Bändchengewebes liegt zwischen 50 und 70 g/m².

Die Fig. 2 zeigt in einem Schnitt einen Kunststoffgewebeverbund mit dem Bändchengewebe 2 und einer Außenfolie 3, welche in Richtung des Bändchengewebes 2 mit einem innenliegenden Aufdruck 5 versehen ist. In dem Ausführungsbeispiel gemäß der Fig. 2 erfolgt eine Extrusionskaschierung mittels Coextrusion, wobei die Zwischenschicht 4 unmittelbar an das Bändchengewebe 2 anschließt und in Richtung der Außenfolie 3 eine weitere Verbindungsschicht 10 vorgesehen ist. Die Verbindungsschicht 10 kann beispielsweise aus einem Terpolymer als Haftvermittler gebildet sein.

Die Fig. 2 zeigt eine bevorzugte Ausgestaltung der Erfindung, wobei eine Schwächungslinie 6 mittels Laser erzeugt ist. Die Schwächungslinie 6 kann aufgrund des Laseradditivs in den Folienbändchen 1 leicht in das Bändchengewebe 2 eingebracht werden. Die unmittelbar anschließende Zwischenschicht 4 wird durch die thermische Aufheizung des Bändchengewebes 2 auch erwärmt und leicht eingekerbt. Jedoch endet die Schwächungslinie 6 innerhalb der Zwischenschicht 4.

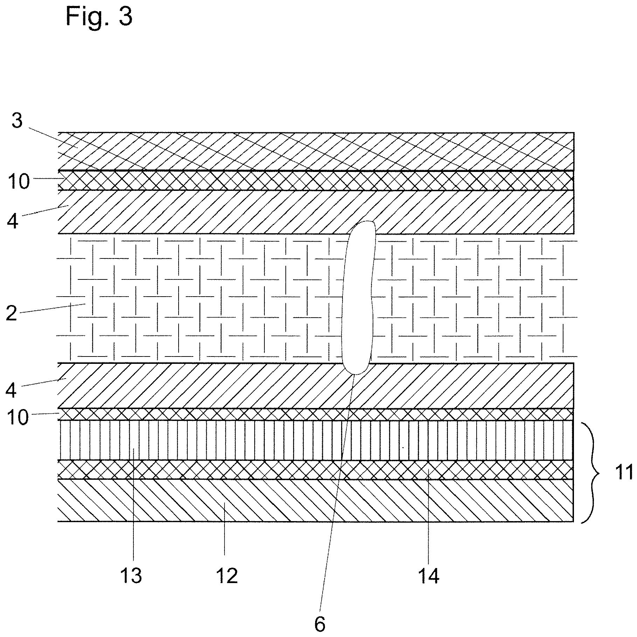

Die Fig. 3 zeigt eine alternative Ausgestaltung des Kunststoffgewebeverbundes, wobei neben einer Außenfolie 3 eine mehrschichtige Innenfolie 11 vorgesehen ist, welche eine Siegelschicht 12 umfasst. Die Siegelschicht 12 ist an der dem Bändchengewebe 2 gegenüberliegenden Seite der Innenfolie 11 angeordnet und bildet eine Oberfläche des Kunststoffgewebeverbundes. In dem dargestellten Ausführungsbeispiel umfasst die Innenfolie 11 neben der Siegelschicht 12 auch eine Barriereschicht 13, die beispielsweise aus EVOH oder Polyamid (PA) bestehen kann. Die Barriereschicht 13 ist über eine Haftvermittlerschicht 14 an die Siegelschicht 12 angeschlossen, wobei die Innenfolie durch Coextrusion, insbesondere Blasfoliencoextrusion gebildet sein kann.

Um einerseits die Außenfolie 3 und andererseits die Innenfolie 11 mit dem Bändchengewebe 2 zu verbinden, ist eine Extrusionskaschierung durch Coextrusion vorgesehen. Auf beiden Seiten des Bändchengewebes 2 schließt zunächst eine Zwischenschicht 4 sowie nachfolgend eine Verbindungsschicht 10 an.

In der Fig. 3 ist des Weiteren auch eine Schwächungslinie 6 angedeutet, welche das Bändchengewebe 2 schwächt und vorzugsweise auch durchtrennt. Die Schwächungslinie 6 endet in den beidseitig angrenzenden Zwischenschichten 4. Je nach Material können aber auch einzelne Schichten mit Laseradditiv ausgerüstet werden, wenn der Kunststoffgewebeverbund nicht im ausreichenden Maße zerreißbar ist. Zumindest die Barriereschicht 13 auf der Basis von EVOH oder PA weist im Vergleich zu einem üblichen Polyolefin wie Polypropylen insbesondere bei der Wellenlänge eines CO₂-Lasers eine größere Absorptionsfähigkeit auf, so dass durch eine entsprechende Einstrahlung auch die Barriereschicht 13 zumindest in einem gewissen Maße geschwächt wird.

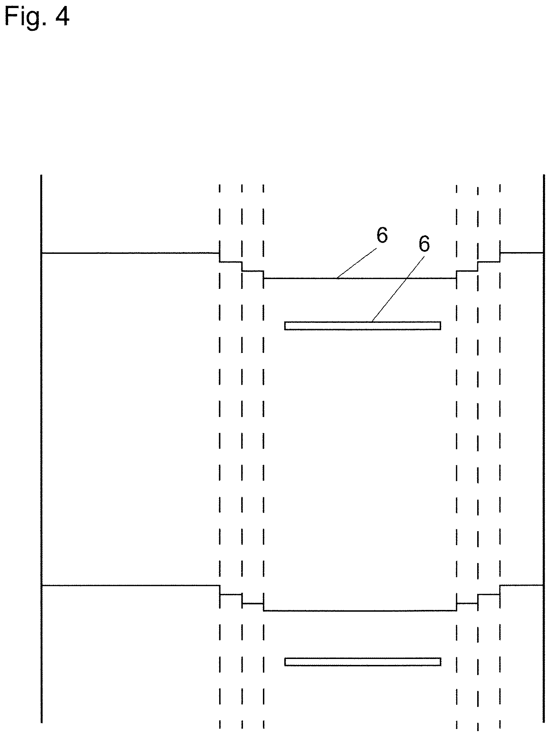

Gemäß der Fig. 4 befindet sich die Schwächungslinie 6 nur in dem Bändchengewebe 2 und erstreckt sich lediglich in die unmittelbar angrenzenden Zwischenschichten 4 hinein.

Im Rahmen der Erfindung ist es wesentlich, dass die Außenfolie 3 zumindest eine erste Folienschicht 9 umfasst, welche frei von Laseradditiv ist und die bei der Bestrahlung mit einem Laser unversehrt bleibt.

Es ist grundsätzlich jedoch nicht ausgeschlossen, dass hinsichtlich der im Rahmen der Erfindung nur optionalen Innenfolie 11 eine Folienschicht über die gesamt Innenfolie 11 durchtrennt ist.

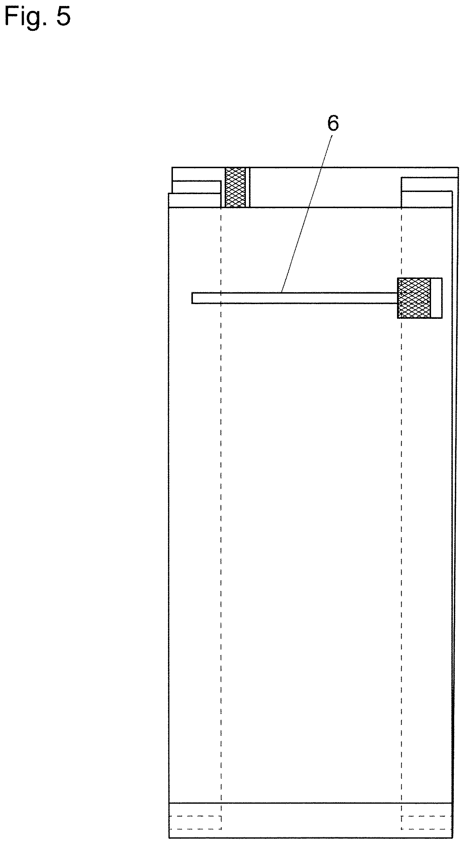

Die Fig. 4 zeigt exemplarisch eine Kunststoffgewebeverbundbahn, aus der nachfolgend ein Seitenfaltenschlauch gebildet wird, aus dem dann einzelne Rohlinge von Seitenfaltenbeuteln abgetrennt werden können (vgl. Fig. 5). Die Fig. 4 verdeutlicht in diesem Zusammenhang, dass unterschiedliche Arten von Schwächungslinien 6 gebildet werden können. Während eine Art von Schwächungslinien 6 sich über die gesamte Breite der Kunststoffgewebeverbundbahn erstreckt, um eine abgestufte Abreißlinie zu bilden, erstreckt sich eine zweite Art von Schwächungslinien 6 entlang der Querrichtung nur zwischen den gegenüberliegenden Rändern der Kunststoffgewebeverbundbahn, um bei einem Verpackungsbeutel eine Öffnung bilden zu können. Konkret umrandet die entsprechende Schwächungslinie 6 einen fertigen Verpackungsbeutel heraustrennbaren Bereich, hinter dem sich beispielsweise ein Wiederverschluss befinden kann.

Die Fig. 5 zeigt rein exemplarisch einen flachliegenden, noch nicht befüllten Verpackungsbeutel, der aus der Kunststoffgewebeverbundbahn nach Fig. 4 gebildet ist, wobei nach dem Falten und umfangseitigen Verschließen einzelne Stücke entlang der als Abreißlinien vorgesehen Schwächungslinien abgerissen sind.

## Patentansprüche

1. Kunststoffgewebeverbund für Kunststoffgewebeverbundbeutel mit einem aus sich kreuzenden Folienbändchen (1) gebildeten Bändchengewebe (2) und mit einer Außenfolie (3), **dadurch gekennzeichnet, dass** das Bändchengewebe (2) ein die Absorption von Laserstrahlung erhöhendes Laseradditiv aufweist und dass die Außenfolie (3) zumindest eine erste Folienschicht (9) umfasst, welche frei von Laseradditiv ist.

2. Kunststoffgewebeverbund nach Anspruch 1, **dadurch gekennzeichnet, dass** die Folienbändchen (1) über ihre gesamte Dicke das Laseradditiv aufweisen.

3. Kunststoffgewebeverbund nach Anspruch 1, **dadurch gekennzeichnet, dass** die Folienbändchen (1) jeweils einen mehrschichtigen Aufbau aufweisen, wobei das Laseradditiv nur in einem Teil der Schichten der Folienbändchen (1) vorgesehen ist.

4. Kunststoffgewebeverbund nach Anspruch 3, **dadurch gekennzeichnet, dass** die Folienbändchen (1) jeweils einen zumindest dreischichten Aufbau aufweisen, wobei eine Kernschicht mit dem Laseradditiv zwischen Deckschichten angeordnet ist, welche frei von Laseradditiv sind.

5. Kunststoffgewebeverbund nach einem der Ansprüche 1 bis 4, **dadurch gekennzeichnet, dass** an einer Schwächungslinie (6) das Bändchengewebe (2) vollständig durchtrennt ist, wobei die erste Folienschicht (9) der Außenfolie (3) unversehrt ist.

6. Kunststoffgewebeverbund nach einem der Ansprüche 1 bis 5, **dadurch gekennzeichnet, dass** die Außenfolie (3) und das Bändchengewebe (2) durch zumindest eine an das Bändchengewebe (2) unmittelbar anschließende Zwischenschicht (4) extrusionskaschiert sind.

7. Kunststoffgewebeverbund nach Anspruch 5 und 6, **dadurch gekennzeichnet, dass** die das Bändchengewebe (2) vollständig durchtrennende Schwächungslinie (6) in der unmittelbar an das Bändchengewebe (2) anschließenden Zwischenschicht (4) endet.

8. Kunststoffgewebeverbund nach einem der Ansprüche 1 bis 7, **dadurch gekennzeichnet, dass** die erste Folienschicht (9) der Außenfolie (3) und das Bändchengewebe (2) aus Polypropylen (PP) gebildet sind.

9. Kunststoffgewebeverbund nach einem der Ansprüche 1 bis 8, **dadurch gekennzeichnet, dass** die Außenfolie (3) an einer ersten Seite des Bändchengewebes (2) angeordnet ist, wobei an einer gegenüberliegenden zweiten Seite des Bändchengewebes (2) eine Innenfolie (11) vorgesehen ist, welche an ihrer dem Bändchengewebe (2) gegenüberliegenden Seite eine Siegelschicht (12) aufweist.

10. Kunststoffgewebeverbund nach einem der Ansprüche 1 bis 9, **dadurch gekennzeichnet, dass** das Laseradditiv Talkum und/oder Schichtsilikate enthält.

11. Verpackungsbeutel aus einem Kunststoffgewebeverbund nach einem der Ansprüche 1 bis 10, wobei die Außenfolie (3) an einer Beutelaußenseite angeordnet ist.

12. Verfahren zur Herstellung eines Kunststoffgewebeverbundes nach einem der Ansprüche 1 bis 10,
wobei Polypropylen mit einem Laseradditiv zu einer Polypropylenfolie extrudiert wird,
wobei die Polypropylenfolie orientiert und in Folienbändchen (1) geschnitten wird,
wobei die Folienbändchen (1) zu einer Bändchengewebebahn verwebt werden,
wobei die Bändchengewebebahn durch eine Extrusionskaschierung mit einer Außenfolienbahn, welche zumindest eine erste Folienschicht (9) umfasst, die frei von Laseradditiv ist, zu einer Kunststoffgewebeverbundbahn kaschiert wird und
wobei durch eine Bestrahlung mittels Laser eine Schwächungslinie (6) derart gebildet wird, dass die Bändchengewebebahn entlang der Schwächungslinie (6) zumindest teilweise zerstört ist.

13. Verfahren nach Anspruch 12, wobei die Schwächungslinie (6) als Abreißlinie derart gebildet wird, dass sie sich entlang einer Querrichtung zwischen gegenüberliegenden Rändern über die gesamte Breite der Kunststoffgewebeverbundbahn erstreckt.

14. Verfahren nach Anspruch 12, wobei die Schwächungslinie (6) derart gebildet wird, dass sie sich entlang einer Querrichtung zwischen gegenüberliegenden Rändern nur über einen Teil der Breite der Kunststoffgewebeverbundbahn erstreckt.

15. Verfahren nach einem der Ansprüche 12 bis 14, wobei die Schwächungslinie (6) mit einem CO₂-Laser gebildet wird.

## Claims

1. A woven plastic laminate for woven plastic laminate bags comprising a strip fabric (2) formed from intersecting film strips (1) and comprising an outer film (3), **characterized in that** the strip fabric (2) has a laser additive which increases the absorption of laser radiation and that the outer film (3) comprises at least one first film layer (9) which is free from laser additive.

2. The woven plastic laminate according to claim 1, **characterized in that** the film strips (1) have the laser additive over the entire thickness thereof.

3. The woven plastic laminate according to claim 1, **characterized in that** the film strips (1) have a multilayer structure wherein the laser additive is provided only in a part of the layers of the film strips (1).

4. The woven plastic laminate according to claim 3, **characterized in that** the film strips (1) each have an at least three-layer structure wherein the core layer with the laser additive is arranged between cover layers which are free from laser additive.

5. The woven plastic laminate according to one of claims 1 to 4, **characterized in that** the strip fabric (2) is completely severed along a line of weakness (6) wherein the first film layer (9) of the outer film (3) is intact.

6. The woven plastic laminate according to one of claims 1 to 5, **characterized in that** the outer film (3) and the strip fabric (2) are extrusion laminated by at least one intermediate layer (4) directly adjoining the strip fabric (2).

7. The woven plastic laminate according to claim 5 and 6, **characterized in that** the line of weakness (6) which completely severs the strip fabric (2) ends in the intermediate layer (4) directly adjoining the strip fabric (2).

8. The woven plastic laminate according to one of claims 1 to 7, **characterized in that** the first film layer (9) of the outer film (3) and the strip fabric (2) are formed of polypropylene (PP).

9. The woven plastic laminate according to one of claims 1 to 8, **characterized in that** the outer film (3) is arranged on a first side of the strip fabric (2), wherein an inner film (11) is provided on an opposite second side of the strip fabric (2) which has a sealing layer (12) on its side opposite the strip fabric (2).

10. The woven plastic laminate according to one of claims 1 to 9, **characterized in that** the laser additive contains talc and/or layered silicates.

11. A packaging bag made of a woven plastic laminate according to one of claims 1 to 10, wherein the outer film (3) is arranged on a bag outer side.

12. A method for producing a woven plastic laminate according to one of claims 1 to 10,
wherein polypropylene containing a laser additive is extruded to form a polypropylene film,
wherein the polypropylene film is oriented and cut into film strips (1),
wherein the film strips (1) are woven to form a strip fabric web,
wherein the strip fabric web is laminated by an extrusion lamination with an outer film web which comprises at least one first film layer (9) which is free from laser additive to form a woven plastic laminate web and
wherein a line of weakness (6) is formed by irradiation by means of a laser in such a manner that the woven fabric web is at least partially destroyed along the line of weakness (6).

13. The method according to claim 12, wherein the line of weakness (6) is formed as a tear line in such a manner that it extends along a transverse direction between opposite edges over the entire width of the woven plastic laminate web.

14. The method according to claim 12, wherein the line of weakness (6) is formed in such a manner that it extends along a transverse direction between opposite edges only over a part of the width of the woven plastic laminate web.

15. The method according to one of claims 12 to 14, wherein the line of weakness (6) is formed with a CO₂ laser.

## Revendications

1. Tissu synthétique composite pour des sachets en tissu synthétique composite comprenant une bandelette de tissu (2) formée de bandelettes de film (1) qui se croisent et un film extérieur (3), **caractérisé en ce que** la bandelette de tissu (2) présente un additif laser augmentant l'absorption de rayonnement laser et que le film extérieur (3) comprend au moins une première couche de film (9) qui est exempte d'additif laser.

2. Tissu synthétique composite selon la revendication 1, **caractérisé en ce que** les bandelettes de film (1) présentent l'additif laser sur toute leur épaisseur.

3. Tissu synthétique composite selon la revendication 1, **caractérisé en ce que** les bandelettes de film (1) présentent respectivement une structure multi-couches, dans lequel l'additif laser est prévu uniquement dans une partie des couches des bandelettes de film (1).

4. Tissu synthétique composite selon la revendication 3, **caractérisé en ce que** les bandelettes de film (1) présentent respectivement une structure au moins en trois couches, dans lequel une couche de noyau avec l'additif laser est disposée entre des couches de revêtement qui sont exemptes d'additif.

5. Tissu synthétique composite selon l'une des revendications 1 à 4, **caractérisé en ce que** la bandelette de tissu (2) est totalement coupée sur une ligne d'affaiblissement (6), dans lequel la première couche de film (9) du film extérieur (3) est intacte.

6. Tissu synthétique composite selon l'une des revendications 1 à 5, **caractérisé en ce que** le film extérieur (3) et la bandelette de tissu (2) sont pelliculées par extrusion par au moins une couche intermédiaire (4) se raccordant directement à la bandelette de tissu (2).

7. Tissu synthétique composite selon la revendication 5 et 6, **caractérisé en ce que** la ligne d'affaiblissement (6) coupant totalement la bandelette de tissu (2) termine dans la couche intermédiaire (4) se raccordant directement à la bandelette de tissu (2).

8. Tissu synthétique composite selon l'une des revendications 1 à 7, **caractérisé en ce que** la première couche de film (9) du film extérieur (3) et la bandelette de tissu (2) sont en polypropylène (PP).

9. Tissu synthétique composite selon l'une des revendications 1 à 8, **caractérisé en ce que** le film extérieur (3) est disposé sur un premier côté de la bandelette de tissu (2), dans lequel sur un second côté opposé de la bandelette de tissu (2), un film intérieur (11) est prévu, lequel présente une couche de soudure (12) sur son côté opposé à la bandelette de tissu (2).

10. Tissu synthétique composite selon l'une des revendications 1 à 9, **caractérisé en ce que** l'additif laser contient du talc et/ou du silicate en couche.

11. Sachet d'emballage en tissu synthétique composite selon l'une des revendications 1 à 10, dans lequel le film extérieur (3) est disposé sur un côté extérieur du sachet.

12. Procédé de fabrication d'un tissu synthétique composite selon l'une des revendications 1 à 10,
dans lequel du polypropylène avec un additif laser est extrudé en un film de polypropylène,
dans lequel le film de polypropylène est orienté et coupé en bandelettes de film (1).
dans lequel les bandelettes de film (1) sont tissées en un lé de bandelettes de tissu,
dans lequel le lé de bandelettes de tissu est pelliculé en un lé de tissu synthétique composite par un pelliculage par extrusion avec un lé de film extérieur qui comprend au moins une première couche de film (9) qui est exempte d'additif laser et
dans lequel une ligne d'affaiblissement (6) est ainsi formée par un rayonnement par laser que le lé de bandelettes de tissu est au moins partiellement détruit le long de la ligne d'affaiblissement (6).

13. Procédé selon la revendication 12, dans lequel la ligne d'affaiblissement (6) est ainsi formée en tant que ligne de découpage qu'elle s'étend le long d'un sens transversal entre deux bords opposés sur toute la largeur du lé de tissu synthétique composite.

14. Procédé selon la revendication 12, dans lequel la ligne d'affaiblissement (6) est ainsi formée qu'elle s'étend le long d'un sens transversal entre deux bords opposés uniquement sur une partie de la largeur du lé de tissu synthétique composite.

15. Procédé selon l'une des revendications 12 à 14, dans lequel la ligne d'affaiblissement (6) est formée par un laser au CO₂.
